**Europäisches Patentamt**

**European Patent Office**

**Office européen des brevets**

(19)

(11) Veröffentlichungsnummer: **0 639 021 A1**

# (12) EUROPÄISCHE PATENTANMELDUNG

(21) Anmeldenummer: **94107415.5**

(22) Anmeldetag: **13.05.94**

(51) Int. Cl.⁶: **H04M 19/00**

(30) Priorität: **31.07.93 DE 4326238**

(43) Veröffentlichungstag der Anmeldung:
**15.02.95 Patentblatt 95/07**

(84) Benannte Vertragsstaaten:
**AT BE CH DE DK ES FR GB GR IE IT LI LU NL PT SE**

(71) Anmelder: **DeTeWe - Deutsche Telephonwerke Aktiengesellschaft & Co.**
**Zeughofstrasse 1**
**D-10997 Berlin (DE)**

(72) Erfinder: **Neuhaus, Hans-Jürgen**
**Wilhelmshöher Strasse 10**
**D-12161 Berlin (DE)**

(54) Schaltungsanordnung für eine übertragerlose Teilnehmerleitungsschnittstelle.

(57) Eine Schaltungsanordnung für eine übertragerlose physikalische Schnittstelle zur Speisung von Telekommunikations-Endgeräten dient der gleichzeitigen Übertragung von Signalen in beiden Richtungen auf einer zweiadrigen Kupferleitung. Die Signalein- und -auskopplung zu bzw. von einem Schnittstellenbaustein wird über Kondensatoren vorgenommen. Bei asymmetrischer Schaltungsanordnung ist eine elektronische Transistordrossel (D) in Emitter-Schaltung vorgesehen, bei symmetrischer Schaltungsanordnung sind zwei elektronische Transistordrosseln (D1, D2) komplementär zueinander ausgelegt. Kondensatoren (C1, C2) der elektronischen Transistordrosseln (D1, D2) dienen der Bildung eines hohen Wechselstromwiderstandes bzw der Ein- und Auskopplung der Signale.

FIG.2

EP 0 639 021 A1

Die Erfindung betrifft eine Schaltungsanordnung für eine übertragerlose physikalische Schnittstelle zur Speisung von Telekommunikations-Endgeräten, die der gleichzeitigen Übertragung von Signalen in beiden Richtungen auf einer zweiadrigen Kupferleitung dient, wobei die Signalein- und -auskopplung zu bzw. von einem Schnittstellenbaustein über Kondensatoren vorgenommen wird.

Beim digitalen Nachrichtennetz, z. B. dem diensteintegrierenden digitalen Nachrichtennetz (ISDN), sind zwischen der digitalen Vermittlung und dem Teilnehmeranschluß physikalische Schnittstellen vorgesehen. Diese Benutzer-Netz-Schnittstellen zwischen der digitalen Vermittlung und einem Teilnehmeranschluß (Zweidraht-Schnittstelle, $U_{P0}$-Schnittstelle) dienen auch der Energieübertragung an die Teilnehmeranschlüsse. Hierzu sind zwei Zusatzadern vorgesehen, oder die Speisung wird über die Adern übertragen, die auch der Informationsübertragung dienen. Im letzten Fall sind Phantomschaltungen für die Speisung vorhanden (P. Bocker: ISDN, das diensteintegrierende digitalen Nachrichtennetz, Springer-Verlag, 1986. S. 75).

Für die Phantomschaltungen werden Übertrager verwendet, die zudem der Signalein- und -auskopplung dienen. Übertrager sind relativ unwirtschaftlich hinsichtlich des Raumbedarfes und des finanziellen Aufwandes gegenüber anderen elektrischen Bauelementen.

Es ist bekannt, diese Übertrager durch elektronische Speisedrosseln und Pegelanpaßschaltungen zu ersetzen (DE 42 33 682, DE 43 20 608).

Der Erfindung lag die Aufgabe zugrunde, für derartige physikalische Schnittstellen konkrete elektronische Schaltungsanordnungen anzugeben.

Diese Aufgabe ist durch die Erfindung gelöst, wie sie im ersten Patentanspruch dargelegt ist. Weitere vorteilhafte Merkmale sind Gegenstand der Unteransprüche.

Die Erfindung ersetzt die bekannten Phantomspeisungen durch elektronische Schaltungsanordnungen mit zugeschalteten Kondensatoren zur Signalein- und -auskopplung.

Nachfolgend wird die Erfindung anhand einer aus drei Figuren bestehenden Zeichnung näher erläutert. Darin zeigen die

Fig. 1      die Schaltungsanordnung einer asymmetrischen Zweidraht-Schnittstellenanordnung, die

Fig. 2      eine symmetrische Schnittstellenanordnung mit Signaleinkopplung über die elektronische Transistordrossel und die

Fig. 3      eine symmetrische Schnittstellenanordnung mit direkter Signaleinkopplung auf die Anschlußleitungen.

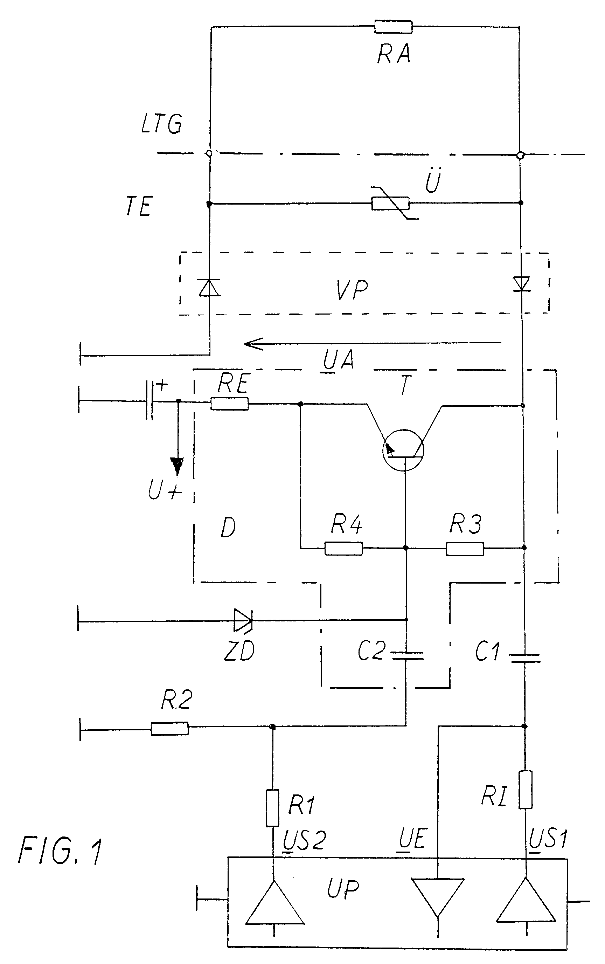

Gleiche Bauelemente tragen in allen Figuren dieselben Bezugszeichen. Die Zweidraht-Schnittstelle dient der Übertragung digitaler Signale gleichzeitig in beiden Richtungen über vorhandene Zweidrahtleitungen. In der asymmetrischen Anordnung nach der Figur 1 wird die Endeinrichtung TE über eine elektronische Transistordrossel D gespeist. Die elektronische Transistordrossel D ist aus einem Transistor T, Basiswiderständen R3, R4, einen Emitterwiderstand RE und einem Kondensator C2 gebildet. Gleichzeitig dient die Transistordrossel D als Verstärker für die Signalspannung $\underline{US2}$ der Sendesignale. Mittels des Spannungsteilers der Basiswiderstände R3, R4 wird der Spannungsabfall über den Transistor T eingestellt. Hierbei dient die Basis-Emitter-Spannung als Referenz. Der Spannungsabfall ist derart einzustellen, daß die Kollektor-Emitter-Spannung des Transistors T bei der maximal auftretenden Signalamplitude mit Sicherheit außerhalb des Sättigungsbereiches bleibt. Anpassungswiderstände R1, R2 dienen der Pegelanpassung des Ausgangs des Schnittstellenbausteines UP an den Pegel der Leitung LTG.

Anstelle des Spannungsteilers aus den Basiswiderständen R3, R4 kann die Spannung über den Transistor T auch durch Einsatz einer Referenzdiode, z.B. einer Z-Diode, eingestellt werden.

Die Kondensatoren C1, C2 dienen dem Einspeisen der Sendesignale, dargestellt durch die Sendesignalspannungen $\underline{US1}$, $\underline{US2}$, und der Auskopplung des Empfangssignals, dargestellt durch die Empfangssignalspannung $\underline{UE}$.

Der Kondensator C2 bewirkt einen hohen Wechselstromwiderstand der elektronischen Transistordrossel D. Da der Arbeitswiderstand der Transistordrossel D durch die Ausgangsspannung am Schnittstellenbaustein UP vorgegeben ist und die Basis-Emitter-Spannung des Transistors T gegenüber den Sendesignalspannungen $\underline{US1}$, $\underline{US2}$ konstant gehalten werden muß, ergibt sich für die Pegelanpassung, daß der Widerstandswert der Parallelschaltung der Anpassungswiderstände R1, R2 am Schnittstellenbaustein UP klein sein muß gegenüber dem Widerstandswert der Parallelschaltung aus den Basiswiderständen R3, R4 und dem Emitterwiderstand RE'. Hierbei ist RE' der Emitterwiderstand RE multipliziert mit dem Stromverstärkungsfaktor $\beta$ des Transistors T.

Der Widerstand RI am Ausgang des Schnittstellenbausteines UP bildet die Eingangs- und Ausgangsimpedanz der Anordnung. Die Impedanz der elektronischen Transistordrossel T und die Ausgangsimpedanz des Sendeverstärkers des Schnittstellenbausteines sind vernachlässigt.

Hinsichtlich der Sendesignalspannung $\underline{US1}$ bildet der Widerstand RI mit dem aus Leitung LTG und Leitungsabschluß bestehenden Lastwiderstand RA einen Spannungsteiler.

Die Sendesignalspannungen $\underline{U}S1$, $\underline{U}S2$ weisen als komplexe Spannungen Betrag und Phase auf. Die Sendesignalspannungen $\underline{U}S1$, $\underline{U}S2$ seien beispielsweise Positiv. Durch die Emitterschaltung des Transistors T erfolgt eine Phasendrehung der Sendesignalspannung $\underline{U}S2$ um 180°., sodaß diese ein negatives Vorzeichen erhält. Damit ergeben sich für die Sendesignale die folgenden Spannungsverhältnisse:

Für die positiven Sendesignale ($\underline{U}S1$)

$$\underline{U}1 = \frac{\underline{U}A}{\underline{U}S1} \approx \frac{RA}{RI+RA}$$

Für die negativen Sendesignale ($\underline{U}S2$)

$$\underline{U}2 = \frac{\underline{U}A}{\underline{U}S2} \approx \frac{R2}{R1+R2} \cdot (-1) \cdot \frac{RA // RI}{RE}$$

worin das Zeichen // die Parallelschaltung der Widerstände bedeutet.

$$\underline{U}2 = (-1) \frac{R2}{R1+R2} \cdot \frac{1}{RE} \cdot \frac{RI \cdot RA}{RI+RA}$$

Zum Einhalten der geforderten Symmetrie des Sendesignals muß gelten:

$$|\underline{U}1| = |\underline{U}2|$$

$$\frac{RA}{RI+RA} = \frac{R2}{R1+R2} \cdot \frac{RI}{RE} \cdot \frac{RA}{RI+RA}$$

Daraus folgt

$$\frac{R2}{R1+R2} \cdot \frac{RI}{RE} = 1$$

Die Pegeleinstellung wird somit bestimmt durch das Verhältnis von RI zu RA und die daraus folgende Dimensionierung der Anpaßwiderstände R1, R2 und des Emitter-Widerstandes RE.

Die Spannung am Ausgang der elektronischen Transistordrossel D kann durch eine Z-Diode ZD begrenzt werden, so daß die an U+ angeschlossene Speiseschaltung, im allgemeinen ein DC/DC-Wandler, in einfacher Weise gegen Überspannung geschützt ist.

Die elektronische Transistordrossel D arbeitet im Fall eines Stromflusses durch die Z-Diode ZD zusätzlich als Längsregler.

Weiterhin kann je nach Anwendungsfall ein Verpolungsschutz VP oder ein Überspannungsschutz Ü realisiert werden.

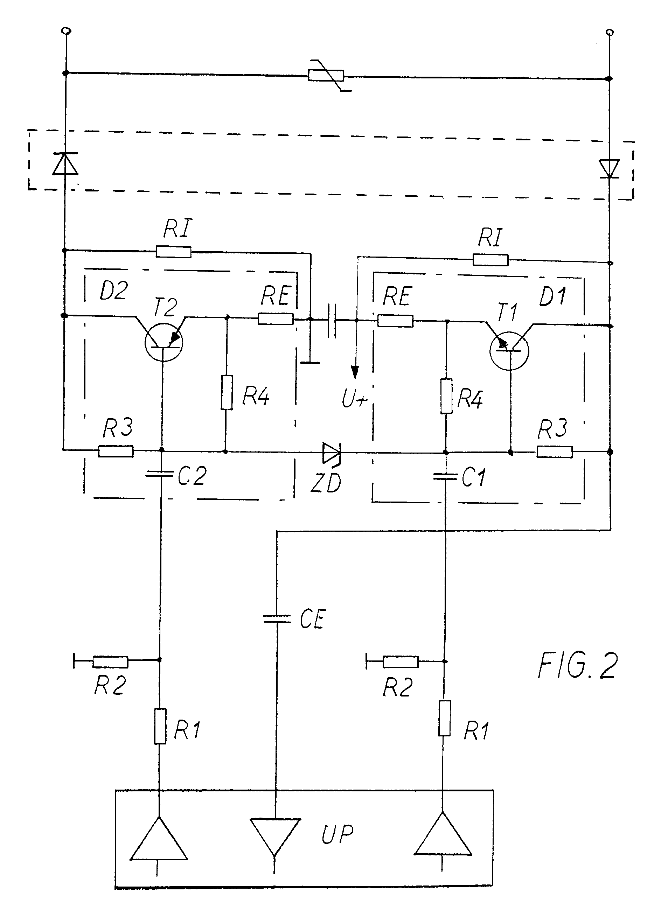

Bei der symmetrischen Schaltungsanordnung sind zwei Varianten möglich. Die Figur 2 zeigt eine Anordnung, bei der die elektronischen Transistordrosseln D1, D2 als Verstärker der an den Kondensatoren C1, C2 ausgekoppelten Signale dienen. Die Transistoren T1, T2 der elektronischen Transistordrosseln D1, D2 werden, wie bei der asymmetrischen Anordnung nach der Figur 1, zur gleichmäßigen Aussteuerung in Emitter-Schaltung (A-Betrieb) betrieben und sind komplementär zueinander. Die Funktionsweise und die Dimensionierung entspricht der asymmetrischen Anordnung.

Die Eingangs- bzw. Ausgangsimpedanz wird im wesentlichen durch die beiden Widerstände RI bestimmt.

Zur Auskopplung der Empfangssignale ist ein Kondensator CE vorgesehen.

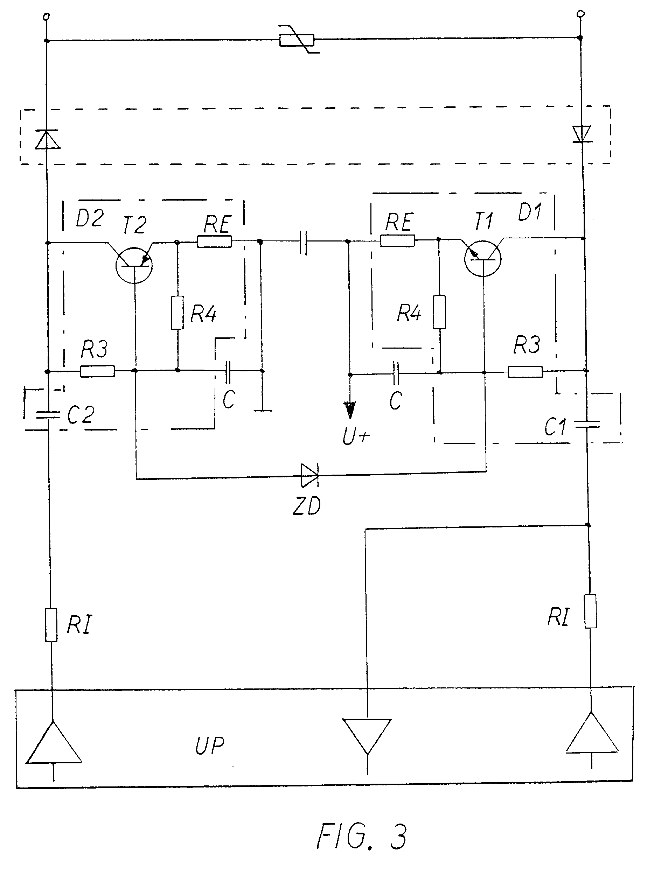

In der symmetrischen Anordnung nach der Figur 3 dienen die Transistoren T1, T2 der elektronischen Transistordrosseln D1, D2 ausschließlich zur Speisung. Die Transistoren T1, T2 sind, wie in der zuvor beschriebenen Anordnung komplementär zueinander ausgelegt. Die Funktionsweise entspricht prinzipiell den bereits beschriebenen Schaltungsanordnungen. Die elektronischen Transistordrosseln D1, D2 sind jedoch nicht als Verstärker für die Signale ausgeführt. Die Signaleinkopplung auf die Zweidraht-Leitung LTG wird direkt über die Kondensatoren C1, C2 und die Widerstände RI vorgenommen. Dabei bildet die Reihenschaltung dieser Widerstände RI im wesentlichen die Eingangs- und Ausgangsimpedanz der Anordnung.

Der erforderliche hohe Wechselstromwiderstand der Transistordrossel D1, D2 wird durch Kondensatoren C an der Basis der Transistoren T1, T2 erzielt.

**Patentansprüche**

1. Schaltungsanordnung für eine übertragerlose physikalische Schnittstelle zur Speisung von Telekommunikations-Endgeräten, die der gleichzeitigen Übertragung von Signalen in beiden Richtungen auf einer zweiadrigen Kupferleitung dient, wobei die Signalein- und -auskopplung zu bzw. von einem Schnittstellenbaustein über Kondensatoren vorgenommen wird, dadurch gekennzeichnet, daß bei asymmetrischer Schaltungsanordnung eine elektronische Transistordrossel (D) in Emitter-Schaltung vorgesehen ist und bei symmetrischer Schaltungsanordnung zwei elektronische Transistordrosseln (D1, D2) komplementär zueinander ausgelegt sind und daß Kondensatoren (C1, C2) der elektronischen Transistordrosseln (D1, D2) der Bildung eines hohen Wechselstromwiderstandes bzw. der Ein- und Auskopplung der Signale dienen.

2. Schaltungsanordnung nach Anspruch 1, dadurch gekennzeichnet, daß die elektronischen Transistordrosseln (D, D1, D2) jeweils aus einem Transistor (T, T1, T2) mit einem Spannungsteiler (R3, R4) und einem Kondensator (C, C1, C2) an der Basis und einem Emitter-Widerstand (RE) gebildet sind.

3. Schaltungsanordnung nach Anspruch 1 und 2, dadurch gekennzeichnet, daß Anpassungswiderstände (R1, R2) am Schnittstellenbaustein (UP) der Pegelanpassung an die elektronischen Transistordrosseln (D, D1, D2) dienen.

4. Schaltungsanordnung nach Anspruch 2 und 3, dadurch gekennzeichnet, daß der Widerstandswert der Parallelschaltung der Anpassungswiderstände (R1, R2) klein ist gegenüber dem Widerstandswert der Parallelschaltung aus den Drosselwiderständen (R3, R4) und dem erhöhten Emitter-Widerstand ($\beta \cdot$ RE) der elektronischen Transistordrosseln (D, D1, D2).

FIG. 1

FIG. 2

FIG. 3

Europäisches Patentamt

# EUROPÄISCHER RECHERCHENBERICHT

Nummer der Anmeldung

EP 94 10 7415

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-3 649 769 (PEST) | 1 | H04M19/00 |
| Y | * Zusammenfassung * | 2-4 | |
| | --- | | |
| X | US-A-4 004 104 (PICANDET ET AL.) | 1 | |
| Y | * Zusammenfassung; Abbildung 2 * | 2-4 | |
| | --- | | |
| X | DE-A-28 44 632 (TE KA DE GMBH) | 1 | |
| | * das ganze Dokument * | | |
| | --- | | |
| A | PATENT ABSTRACTS OF JAPAN vol. 6, no. 115 (E-115) (993) 26. Juni 1982 & JP-A-57 042 263 (FUJITSU K.K.) 9. März 1982 * Zusammenfassung * | 3,4 | |
| | ----- | | |

| | |
|---|---|
| | **RECHERCHIERTE SACHGEBIETE (Int.Cl.6)** |
| | H04M H04Q |

Der vorliegende Recherchenbericht wurde für alle Patentansprüche erstellt

| Recherchenort | Abschlußdatum der Recherche | Prüfer |
|---|---|---|
| DEN HAAG | 16. September 1994 | Montalbano, F |

EPO FORM 1503 03.82 (P04C03)